# EUROPÄISCHE PATENTSCHRIFT

(11) **EP 0 901 880 B1**
(45) Veröffentlichungstag und Bekanntmachung des Hinweises auf die Patenterteilung: **17.12.2003**
(21) Anmeldenummer: 98116776.0
(22) Anmeldetag: 04.09.1998
(51) Int. Cl.: B23Q 7/04, B23Q 7/14, B23Q 1/64, B23Q 3/155, F16B 45/00

(54) **Verfahren und Vorrichtung ein von einer Werkzeugmachine aufgenommenes Trägerorgan von einer ersten in eine zweite Position zu bewegen**
Method and device for the transfer of a carrier in a machine tool from a first to a second position
Procédé et dispositif pour déplacer une palette d'une machine-outil entre une première position et une deuxième position

(30) Priorität: 09.09.1997 CH 212297
(43) Veröffentlichungstag der Anmeldung: 17.03.1999
(73) Patentinhaber: CHARMILLES TECHNOLOGIES S.A., 1217 Meyrin 1 (CH)
(72) Erfinder: Navarrete, Miguel, 1024 Genève (CH)
(74) Vertreter: Micheli & Cie

(56) Entgegenhaltungen:
- DE-A- 2 852 846
- FR-A- 1 171 554
- US-A- 5 544 708
- PATENT ABSTRACTS OF JAPAN vol. 005, no. 053 (M-063), 14. April 1981 (1981-04-14) & JP 56 009153 A (TOYODA MACH WORKS LTD), 30. Januar 1981 (1981-01-30)

## Beschreibung

Die Erfindung betrifft ein Verfahren und eine Vorrichtung, ein von einer Wechselvorrichtung für eine Werkzeugmaschine aufgenommenes Trägerorgan, auf welchem ein Werkstück angeordnet ist, von einer ersten in eine zweite Position zu bewegen.

Zur Automatisierung einer Bearbeitung wird häufig ein Wechsel von Werkstücken mittels einer Wechselvorrichtung durchgeführt. Im Falle von Werkzeugmaschinen sind Werkstücke und Werkzeuge häufig auf Trägerorganen, beispielsweise Paletten, montiert, welche mit Kupplungselementen ausgestattet sind, die mit einem, mit einem Greifarm verbundenen, Greiforgan aufgenommen werden können. Die Bearbeitung, etwa von Seitenflächen eines Werkstücks, kann es erforderlich machen, daß das Trägerorgan gegenüber einer ersten Position in eine zweite Position gedreht werden muß. Auch bei der Entnahme eines Trägerorgans aus dem Arbeitsbereich einer Maschine muß das Trägerorgan häufig um eine Achse gekippt werden, um eine bei der Bearbeitung in Kavitäten des Werkstückes verbliebene Flüssigkeit zu entleeren, bevor dieses, wieder in die ursprüngliche Orientierung gebracht, in einem Magazin abgelegt werden kann.

Insbesondere bei der funkenerosiven Bearbeitung wird zur Automatisierung der Bearbeitung häufig ein Wechsel von Werkzeugen oder Werkstücken mittels einer Wechselvorrichtung durchgeführt. Hierzu sind die Werkstücke oder Werkzeuge auf Paletten befestigt, welche in einem Magazin gelagert sind und bei Bedarf durch einen Greifarm der Wechselvorrichtung von dort aufgenommen werden und in den Arbeitsbereich einer Maschine gebracht werden. Vor Ablage in einem Magazin muß beispielsweise die bei der Bearbeitung in Kavitäten des Werkstücks verbliebene dielektrische Flüssigkeit durch Kippen des Werkstücks entfernt werden.

Bekannte Wechselgeräte zum Wechseln von Werkzeugen oder Werkstücken, wie in der Patentschrift DE 37 20 180 beschrieben, vollführen die Kippbewegung eines Trägerorgans, indem an dem Greifarm ein zusätzliches Drehelement angebracht ist und mittels eines Motors nun eine Drehbewegung des Trägerorgans durchgeführt wird. Zur Aufnahme eines Trägerorgans aus dem Magazin und dessen Positionierung im Arbeitsbereich der Maschine braucht die spezielle Kippbewegung nicht durchgeführt werden. Für die Kippbewegung wird dagegen ein nur für diese geeigneter spezieller Bewegungsablauf durchgeführt, wofür ein zusätzliches, am Greifarm befestigtes Drehelement und entsprechende zugehörige Antriebs-, Steuer- und Kontrollelemente für die Drehbewegung verwendet werden.

Der vorliegenden Erfindung liegt daher die Aufgabe zugrunde, ein Verfahren zu schaffen, welches ermöglicht, die Kippbewegung eines Trägerorgans derart durchzuführen, daß auf die Anbringung von Antriebs- und zugehörigen Steuerund Kontrollelementen verzichtet werden kann. Das Verfahren soll einfach und kostengünstig sein. Eine weitere Aufgabe ist die Schaffung einer Vorrichtung, welche die Durchführung des Verfahrens erlaubt.

Diese Aufgabe wird durch die Lehre des Anspruches 1 gelöst. Weitere Vorteile, Merkmale und Einzelheiten der Erfindung ergeben sich aus den abhängigen Ansprüchen. Anhand der beiliegenden Zeichnungen wird ein bevorzugtes Ausführungsbeispiel näher erläutert; diese zeigen schematisch in
- Fig. 1: eine Zusammenstellung des Bewegungsablaufs der Kippbewegung,
- Fig. 2: eine perspektivische Darstellung des Greiforgans,
- Fig. 3: eine Palette auf einer Auflage mit dem Kupplungselement in der Verriegelungsposition,
- Fig. 4: eine Palette auf einer Auflage mit dem Kupplungselement in der Position zum Kippen der Palette,
- Fig. 5: eine perspektivische Darstellung des an einer Palette befestigen Kupplungselements.

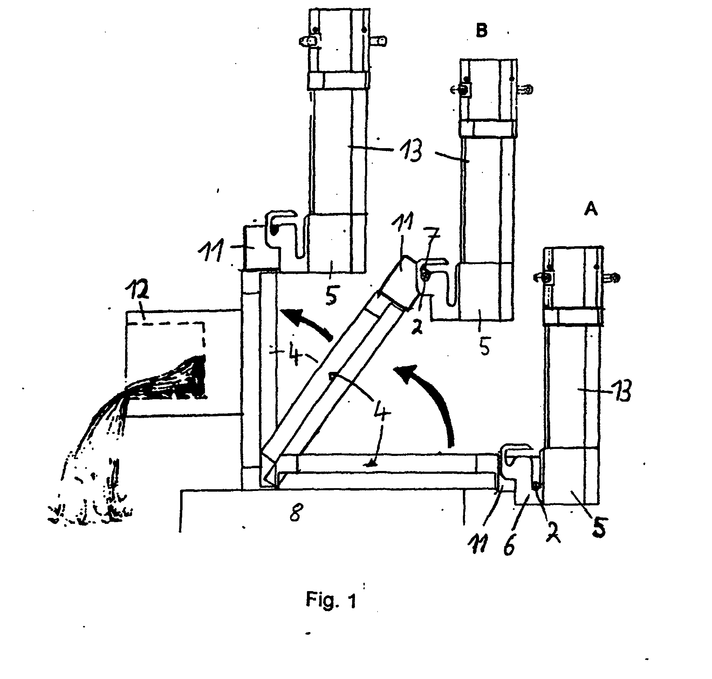

In Figur 1 ist eine Zusammenstellung des Bewegungsablaufs der Kippbewegung gezeigt. Zuerst (A) liegt eine Palette 4 horizontal auf einer Auflage 8, Achsbolzen 2 befinden sich in einer Verriegelungsposition 6 eines Greiforgans 5, dieses ist an einem Greifarm 13 befestigt. In (B) sind die Achsbolzen 2 in einer Position 7, welche eine Kippbewegung erlaubt. Das Greiforgan 5 hat die Palette 4 so angehoben, daß diese eine Drehbewegung durchführt, wobei die auf der Auflage 8 liegende Kante der Palette als Drehachse dient. An der entgegengesetzen Seite der Palette ist ein Kupplungselement 11 befestigt. Das Greiforgan 5 bewegt sich kreisbogenförmig um die Drehachse bis die Palette 4 senkrecht zur Auflage 8 steht, wie in (C) dargestellt. Hierdurch wird eine Flüssigkeit, welche sich in einer Kavität eines auf der Palette aufgespannten Werkstücks 12 befindet, entleert.

Die Orientierung des Greifarms 13 und des Greiforgans 5 ändert sich bei der Bewegung nicht.

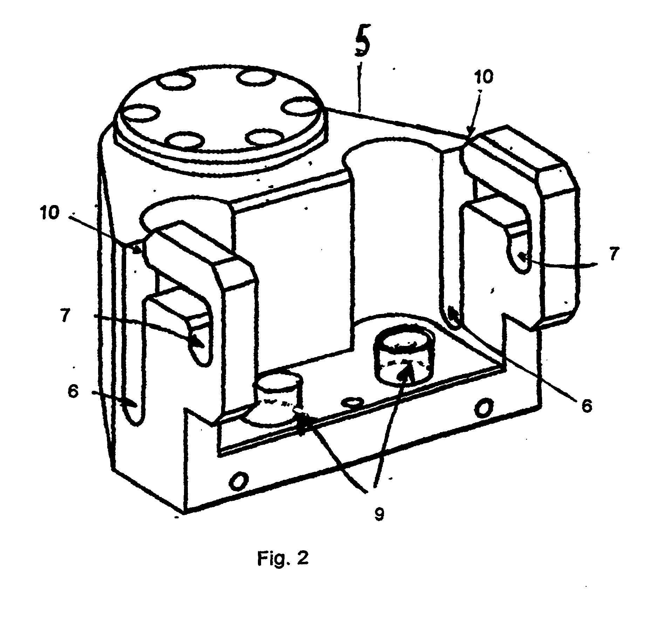

Figur 2 zeigt das Greiforgan 5, welches an dem hier nicht dargestellten Greifarm (13) befestigt werden kann. Hier sind neben zwei Zentrierstiften 9 die beiden Positionen zur Lagerung der Achsbolzen des nicht dargestellten Kupplungselements zu erkennen. Position 6 dient dem Transport des Kupplungselements, ohne daß das Greiforgan dessen horizontale Orientierung ändert. Durch zwei aufeinander senkrecht stehende schlitzförmige Führungselemente für die Achsbolzen des Kupplungselements ist diese mit der Poisition 7 verbunden, in welcher die Kippbewegung durchgeführt werden kann. Durch diese ist auch der Bewegungsablauf des Greiforgans zur Änderung von der Verriegelungsposition zur Kippposition festgelegt. Das Greiforgan muß zuerst in der ersten Schlitzrichtung um die Schlitzlänge abgesenkt werden, wodurch auch die Zentrierstifte 9 aus den Bohrungen des Kupplungselements entfernt werden. Danach wird das Greiforgan horizontal in der Kupplungselement wegweisenden Richtung in der zweiten Schlitzrichtung bewegt, bevor er am Schlitzende wieder vertikal angehoben werden kann, um die Achsbolzen in die Position 7 zu bringen. Die Öffnungen 10 beim Übergang von vertikalem zu horizontalem Führungsschlitz dienen zur Entfernung des Kupplungselements aus dem Greiforgan bzw. seiner Aufnahme. Anstelle der Öffnungen 10 kann das Kupplungselement auch ununterbrochene Führungselemente besitzen, wobei es in diesem Falle eine Vorrichtung zum Aufnehmen und Abnehmen des Trägerorgans besitzt.

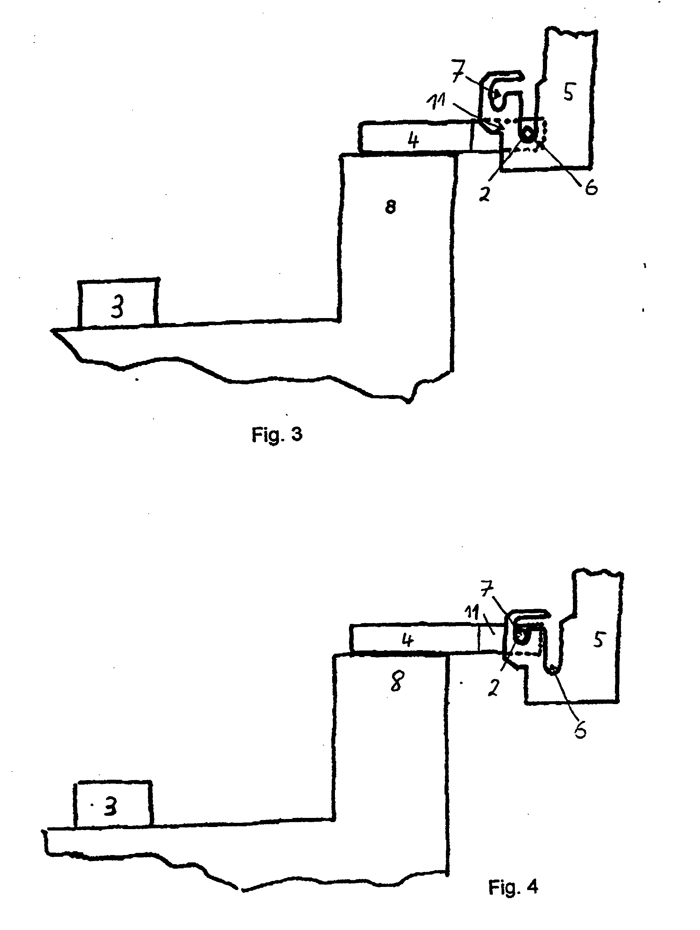

Figur 3 zeigt die Palette 4 nachdem diese von einer Spanneinheit 3 auf die Auflage 8 transportiert wurde. Die Auflage 8 kann beispielsweise durch den Rand des Beckens für die dielektrische Flüssigkeit einer Elektroerosionsmaschine realisiert sein. In dieser Position befinden sich die Achsbolzen 2 des Kupplungselements 11 in der Verriegelungsposition 6. Während die Palette 4 auf der Auflage 8 ruht, wird das Greiforgan 5, ohne die Palette 4 zu bewegen, so bewegt, daß die beiden Achsbolzen 2 in die Position 7 gelangen, welche eine Rotationsbewegung des Kupplungselements 11 mit der damit verbundenen Palette 4 um die Kippachse ermöglicht, wie es in Figur 4 gezeigt ist. Die hier nicht gezeigten Zentrierstifte werden dabei aus den ebenfalls nicht dargestellten Bohrungen herausbewegt.

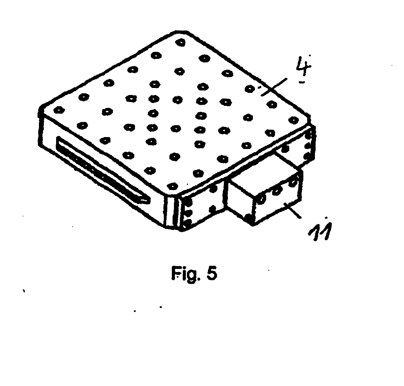

Das Kupplungselement 11 der Figur 5 ist seitlich an einer Palette 4 befestigt. Auf der Palette kann ein Werkstück aufgespannt werden (nicht dargestellt).

Die Bewegungsabläufe des Greifarms, durch welche der Übergang von der Verriegelungsposition zur Position, welche die Kippbewegung der Palette erlaubt, erzielt wird, sowie die Durchführung der Kippbewegung selbst, unterscheiden sich nicht von vertikalen und horizontalen Bewegungen, welche der Greifarm zum Transport einer Palette zwischen einem Magazin und dem Arbeitsbereich einer Maschine durchführt. Sie erfordern daher auch keine zusätzlichen Antriebs- und Steuerungselemente und sind daher mit verschiedensten Wechseleinrichtungen einfach durchführbar.

## Patentansprüche

1. Verfahren, ein von einer Wechselvorrichtung für eine Werkzeugmaschine aufgenommenes Trägerorgan (4) von einer ersten in eine zweite Position zu bewegen, **dadurch gekennzeichnet, daß** in einem ersten Schritt eine Verbindung des Trägerorgans über ein Kupplungselement (11) mit einem an einem Greifarm (13) befestigen Greiforgan (5) vorgenommen wird, in einem zweiten Schritt das Kupplungselement (11) im Greiforgan (5) in eine Arretierungsposition (6) gebracht wird, in einem dritten Schritt das Trägerorgan (4) auf eine Auflage (8) bewegt und dort abgelegt wird, in einem vierten Schritt das Kupplungselement (11) im Greiforgan (5) in eine weitere Position (7) gebracht wird, ohne das Trägerorgan (4) zu bewegen, in welcher das Kupplungselement (11) nicht mehr im Greiforgan (5) arretiert ist, sondern eine Kippbewegung um eine im Greiforgan (5) gelagerte Achse durchführen kann, in einem fünften Schritt das Greiforgan (5) eine Bewegung durchführt, durch welche das Trägerorgan (4) von einer horizontalen in eine vertikale Lage gekippt wird, und in einem sechsten Schritt in Umkehrung der vorangegangenen Schritte das Trägerorgan (4) wieder in die horizontale Lage zurückgebracht, arretiert, transportiert und abgelegt wird.

2. Verfahren nach Anspruch 1, **dadurch gekennzeichnet, daß** die Arretierung und Entriegelung des Kupplungselements (11) im Greiforgan (5) durch Abfolge von Bewegungen des Greiforgans (5) erfolgt, ohne daß innerhalb des Greiforgans (5) oder des Kupplungselements (11) selbst bewegliche Arretierungselemente bewegt werden.

3. Verfahren nach Anspruch 1 und 2, **dadurch gekennzeichnet, daß** die Bewegungen zur Arretierung, Entriegelung und Durchführung der Kippbewegung nur vertikale und horizontale Bewegungselemente sowie deren Überlagerungen/Kombinationen enthalten, mit welchen der Greifarm (13) zum Transport eines Trägerorgans (4) auch ohne Realisierung der Kippbewegung bewegt wird, insbesondere keine Drehbewegungen.

4. Vorrichtung zur Durchführung des Verfahrens nach einem der Ansprüche 1 bis 3, mit einem Greiforgan (5) und einem Kupplungselement (11), **dadurch gekennzeichnet, daß** sich in dem Greiforgan (5) eine erste Position (6) zur Aufnahme des Kupplungselements (11) befindet, in der das Kupplungselement (11) relativ zum Greiforgan (5) nur in eine Längsrichtung bewegbar und somit in andere Richtungen arretiert ist, und eine Drehbewegung verhindert ist, und somit ein mit dem Kupplungselement (11) verbundenes Trägerorgan (4) auf eine Auflage (8) verlagerbar ist, daß in dem Greiforgan (5) eine zweite Position (7) vorhanden ist, in welcher das Kupplungselement (11) um eine horizontale Achse drehbar gelagert ist und somit eine Drehbewegung des mit dem Kupplungselement (11) verbundenen Trägerorgans (4) möglich ist, und daß das Kupplungselement (11) Achsbolzen (2) aufweist, welche die Bewegung des Kupplungselements (11) in die beiden Positionen im Greiforgan (5) erlauben.

5. Vorrichtung nach Anspruch 4, **dadurch gekennzeichnet, daß** die zwei Positionen (6,7) im Greiforgan (5) durch Führungselemente miteinander verbunden sind, welche die Bewegungsrichtungen des Greiforgans (5) zur Überführung des Kupplungselements (11) von der einen (6) in die andere Position (7) festlegen.

6. Vorrichtung nach Anspruch 5, **dadurch gekennzeichnet, daß** die Führungselemente an einer dritten Position (10) unterbrochen sind, an welcher die Aufnahme bzw. Abgabe des Kupplungselements (11) in das bzw. aus dem Greiforgan (5) erfolgen kann.

7. Vorrichtung nach Anspruch 5, **dadurch gekennzeichnet, daß** die Führungselemente nicht unterbrochen sind und das Kupplungselement (11) eine Vorrichtung zur Aufnahme und Abgabe eines Trägerorgans (4) besitzt.

## Claims

1. Method for transferring a carrier unit (4) picked up by a changing device for a machine tool from a first to a second position, **characterized in that** in a first step, the carrier unit is attached via a clutch element (11) to a gripping unit (5) held by a grip arm (13); in a second step, the clutch element (11) is brought into a blocking position (6) in the gripping unit (5); in a third step, the carrier unit (4) is moved to a bearing surface (8) and deposited there; in a fourth step, the clutch element (11) is brought to a further position (7) in the gripping unit (5) without moving the carrier unit (4), in which position the clutch element (11) is no longer blocked in the gripping unit (5) but can perform a tilting motion about an axle supported within the gripping unit (5); in a fifth step, the gripping unit (5) performs a motion by which the carrier unit (4) is tilted from a horizontal into a vertical position; and in a sixth step, which reverses the preceding steps, the carrier unit (4) is returned into the horizontal position, blocked, transported, and deposited.

2. Method according to claim 1, **characterized in that** the blocking and release of the clutch element (11) in gripping unit (5) occur by a sequence of motions of the gripping unit (5) without moving any mobile blocking elements within the gripping unit (5) or clutch element (11) themselves.

3. Method according to claim 1 and 2, **characterized in that** the motions for blocking, release, and execution of the tilting motion only consist of vertical and horizontal elements of motion as well as their superpositions/combinations by means of which the grip arm (13) is moved for the transport of a carrier unit (4) even without realising the tilting motion, and particularly without realising rotary motions.

4. Device with a gripping unit (5) and a clutch element (11) for realising the method according to one of the claims 1 to 3, **characterized in that** within the gripping unit (5) a first position (6) for receiving the clutch element (11) exists in which the clutch element (11) can only be moved in a longitudinal direction relative to the gripping unit (5) and thus is blocked in other directions and a rotary motion is prevented, and thus a carrier unit (4) that is attached to the clutch element (11) can be transferred to a bearing surface (8), **in that** in the gripping unit (5) a second position (7) exists in which the clutch element (11) is supported rotatably about a horizontal axis and thus a rotary motion of the carrier unit (4) that is attached to the clutch element (11) is possible, and **in that** the clutch element (11) has axle bars (2) which allow the clutch element (11) to move to the two positions within the gripping unit (5).

5. Device according to claim 4, **characterized in that** the two positions (6, 7) within the gripping unit (5) are connected with each other by guiding elements which define the directions of motion of the gripping unit (5) when it transfers the clutch element (11) from one position (6) to the other (7).

6. Device according to claim 5, **characterized in that** the guiding elements are interrupted at a third position (10) at which the clutch element (11) can be taken up into the gripping unit (5) or released from it, respectively.

7. Device according to claim 5, **characterized in that** the guiding elements are not interrupted and the clutch element (11) includes a device for picking up and releasing a carrier unit (4).

## Revendications

1. Procédé pour déplacer un organe porteur (4) d'un dispositif échangeur pour machine-outil d'une première position vers une deuxième position, **caractérisé par le fait que**, dans une première étape, on établit, par l'intermédiaire d'un élément d'accouplement (11), une connexion de l'organe porteur avec un organe de préhension (5) fixé à un bras de préhension (13), dans une deuxième étape, l'élément d'accouplement (11) est amené dans une position de blocage (6) dans l'organe de préhension (5), dans une troisième étape, l'organe porteur (4) est déplacé sur un support (8) et déposé là, dans une quatrième étape, l'élément d'accouplement (11) est amené dans une autre position (7) dans l'organe de préhension (5) sans déplacer l'organe porteur (4), position dans laquelle l'élément d'accouplement (11) n'est plus bloqué dans l'organe de préhension (5), mais peut effectuer un mouvement basculant autour d'un axe logé dans l'organe de préhension (5), dans une cinquième étape, l'organe de préhension (5) effectue un mouvement par lequel l'organe porteur (4) est basculé à partir d'une position horizontale dans une position verticale, et dans une sixième étape, en inversant les étapes précédentes, l'organe porteur (4) est ramené dans la position horizontale, bloqué, transporté et déposé.

2. Procédé selon la revendication 1, **caractérisé par le fait que** le blocage et le déblocage de l'élément d'accouplement (11) dans l'organe de préhension (5) est effectué par une succession de mouvements de l'organe de préhension (5), sans pour autant que des éléments de blocage mobiles ne soient déplacés à l'intérieur de l'organe de préhension (5) ou de l'élément d'accouplement (11).

3. Procédé selon les revendications 1 et 2, **caractérisé par le fait que** les mouvements pour le blocage, le déblocage et l'exécution du mouvement basculant ne comprennent que des éléments de mouvement verticaux et horizontaux ainsi que leurs superpositions/combinaisons, par l'intermédiaire desquelles le bras de préhension (13) pour le transport d'un organe porteur (4) est déplacé même sans exécution du mouvement basculant, en particulier sans rotation.

4. Dispositif pour l'exécution du procédé selon l'une des revendications 1 à 3, avec un organe de préhension (5) et un élément d'accouplement (11), **caractérisé par le fait qu'**il y a une première position (6) dans l'organe de préhension (5) pour la réception de l'élément d'accouplement (11), dans laquelle l'élément d'accouplement (11) ne peut être déplacé que dans une direction longitudinale par rapport à l'organe de préhension (5) et est ainsi bloqué dans les autres directions, et dans laquelle une rotation est empêchée, et ainsi un organe porteur (4) connecté à l'élément d'accouplement (11) est positionnable sur un support (8), **par le fait qu'**il y a une deuxième position (7) dans l'organe de préhension (5), dans laquelle l'élément d'accouplement (11) est logé de façon pivotable autour d'un axe horizontal et permettant ainsi une rotation de l'organe porteur (4) connecté à l'élément d'accouplement (11), et **par le fait que** l'élément d'accouplement (11) comprend des boulons d'axe (2) permettant le déplacement de l'élément d'accouplement (11) dans les deux positions dans l'organe de préhension (5).

5. Dispositif selon la revendication 4, **caractérisé par le fait que** les deux positions (6, 7) dans l'organe de préhension (5) sont connectées entre elles par des éléments de guidage qui déterminent les directions de mouvement de l'organe de préhension (5) pour le déplacement de l'élément d'accouplement (11) d'une position (6) vers l'autre position (7).

6. Dispositif selon la revendication 5, **caractérisé par le fait que** les éléments de guidage sont interrompus à une troisième position (10), dans laquelle la prise, respectivement le dépôt de l'élément d'accouplement (11) dans respectivement hors de l'organe de préhension (5) peuvent être effectués.

7. Dispositif selon la revendication 5, **caractérisé par le fait que** les éléments de guidage ne sont pas interrompus et **par le fait que** l'élément d'accouplement (11) comprend un dispositif pour la réception et le dépôt de l'organe porteur (4).
